# FASCICULE DE BREVET EUROPEEN

(11) **EP 0 893 280 B1**
(45) Date de publication et mention de la délivrance du brevet: **15.05.2002**
(21) Numéro de dépôt: 98112981.0
(22) Date de dépôt: 13.07.1998
(51) Int. Cl.: B60B 21/06, B60B 1/00

(54) **Jante de bicyclette prévue pour un montage tubeless et roue de bicyclette**
Fahrradnabe für die Montierung eines schlauchlosen Reifens und Fahrradrad
Bicycle rim for mounting tubeless tyres and bicycle wheel

(30) Priorité: 25.07.1997 FR 9709928
(43) Date de publication de la demande: 27.01.1999
(73) Titulaire: MAVIC S.A., 01990 Saint-Trivier sur Moignans (FR)
(72) Inventeur: Lacombe, Jean-Pierre, 74150 Marcellaz Albanais (FR); Mercat, Jean-Pierre, 01990 Saint Trivier sur Moignans (FR)
(74) Mandataire: Lejeune, Benoit

(56) Documents cités:
- EP-A- 0 103 724
- EP-A- 0 615 865
- DE-A- 4 206 311
- DE-A- 4 444 044
- FR-A- 2 351 803

## Description

L'invention concerne une jante pour une roue de bicyclette. L'invention concerne également une roue de bicyclette ayant une telle jante, ainsi qu'un pneumatique tube less.

L'invention s'applique plus particulièrement à une jante du type crosse ou à crochet qui est prévue pour un montage dit "tubeless", c'est-à-dire sans chambre à air.

De façon connue, une roue comprend une jante, et un moyeu relié à la jante par des rayons répartis selon deux nappes. La jante comprend généralement deux ponts reliés entre eux par des flancs latéraux qui se prolongent au-delà du pont supérieur par des ailes de façon à former un canal annulaire où le pneu vient se loger. Les ailes présentent dans leur partie supérieure un rebord en crosse ou en crochet ayant pour fonction de retenir le pneumatique après gonflage. De façon usuelle, les ponts de la jante sont percés d'orifices qui servent au passage ou à la retenue des écrous de rayons.

Il est connu de réaliser un montage tubeless du pneu. Un tel montage est avantageux car il supprime la chambre à air en coût, en montage et en poids. Un tel montage rend par ailleurs la roue équipée du pneu moins sensible aux crevaisons par pincement, ou par perforation. Une épine par exemple qui traverserait le pneu reste en effet encastrée dans son logement, si bien que la perte d'air est très peu importante, voire négligeable.

Pour réaliser un montage tubeless du pneu, il est connu d'obturer tous les orifices des rayons par un fond de jante étanche. La demande de brevet EP 615 865 divulgue une telle technique. Toutefois, il est difficile de maîtriser l'étanchéité au niveau de tous les orifices de rayon. Pour remédier à cela, la demande précitée propose également que des lèvres du pneumatique viennent recouvrir les bords du fond de jante, de façon à former avec lui un volume fermé. Ceci nécessite un pneu particulier dont le montage est par ailleurs délicat.

Pour remédier au problème d'étanchéité de la jante, il est aussi connu d'après la demande de brevet DE 42 06 311 de réaliser une jante avec un pont supérieur non percé. Les rayons sont alors ancrés dans des orifices du pont inférieur. Le fait d'avoir un pont supérieur lisse, c'est-à-dire sans trou, mis à part l'orifice de la valve, résout les questions d'étanchéité à ce niveau. Une telle jante est en plus compatible avec des pneus conventionnels. Toutefois il se pose alors un problème d'étanchéité entre les flancs du pneu et la jante. Ce problème peut se manifester au gonflage du pneu, notamment lorsque ce gonflage est réalisé avec un moyen de faible débit, une pompe manuelle par exemple. En effet, lorsque le pneu est monté sur la jante, le positionnement du pneu est très faible sur la largeur du pont supérieur. Dans ces conditions, la quantité d'air insufflée dans le pneu par une pompe s'échappe localement entre les flancs et le pont supérieur sans provoquer ni gonflage ni étanchéité.

La demande de brevet EP-A-103724, montrant le préambule des revendications 1 et 5, propose d'aménager le pont supérieur de la jante avec une bosse de chaque côté de la gorge de montage du pneu. Les faces des bosses sont aménagées pour que les talons du pneu y trouvent une étanchéité primaire permettant le gonflage à l'aide d'une pompe à main. Toutefois ce mode de construction de la jante n'est pas adapté à tous les types de pneu, en particulier les pneus à tringles souples dont les talons n'auraient pas suffisamment de tenue pour s'appliquer contre les faces internes des bosses.

Le problème peut aussi se manifester en roulant, si le pneu n'est pas suffisamment plaqué contre les flancs de la jante. En cas de choc latéral, par exemple dû à une pierre, l'air peut s'échapper si le pneu se décolle de la jante notamment à basse pression. Dans ce cas en effet, les flancs du pneu ne sont plus repoussés contre les ailes par la chambre à air.

Un but de l'invention est de proposer une jante améliorée qui est prévue pour un montage tubeless du pneumatique.

Un autre but de l'invention est de proposer une jante dont le profil améliore les conditions de gonflage du pneu.

Un autre but est de proposer une jante dont le profil améliore la tenue du pneu lorsqu'il est gonflé.

Ces buts et d'autres buts et avantages de l'invention sont atteints par la jante telle qu'elle est définie dans la revendication 1.

Ils sont également atteints par la roue équipée d'un pneu tubeless tel qu'elle est définie dans la revendication 5.

L'invention sera mieux comprise en se référant à la description ci-dessous et aux dessins en annexe qui en font partie intégrante.

La figure 1 montre en vue de côté une roue complète équipée d'un pneumatique.

La figure 2 est une vue de face en coupe d'un profil de jante selon un mode préférentiel de réalisation, au niveau d'un orifice d'accrochage de rayon.

La figure 3 est une vue de côté en coupe d'une portion de la jante représentée en figure 2.

Les figures 4, 5, 6 représentent une vue en coupe de la jante équipée de son pneu et illustrent les différentes phases du gonflage du pneu.

La figure 7 est relative à une variante de réalisation de la jante.

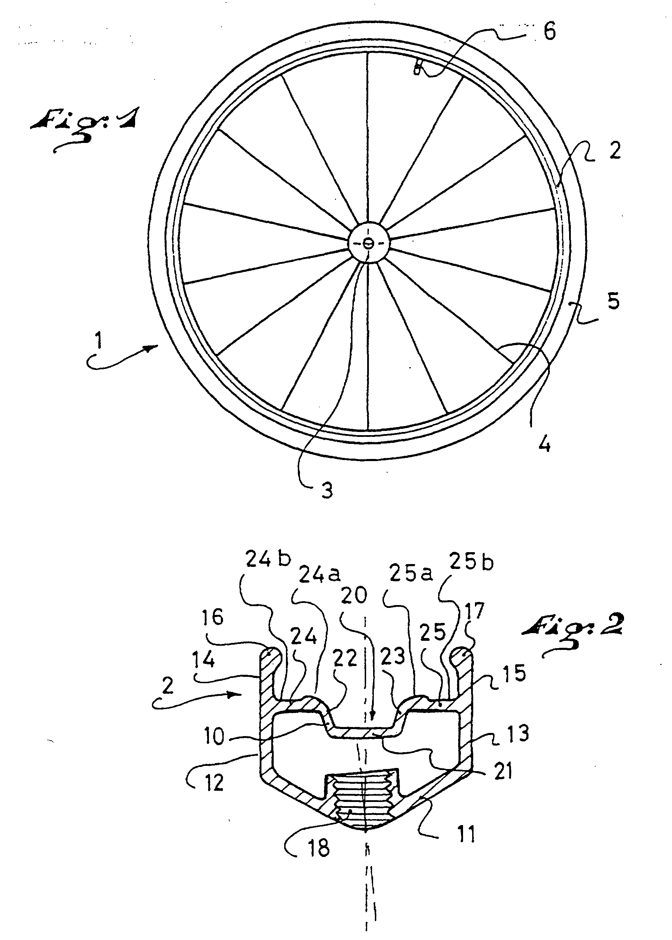

La figure 1 représente une roue 1 comprenant de façon connue une jante 2 reliée à un moyeu central 3 par deux nappes de rayons. Seule la nappe de rayon 4 est visible en figure 1. Les rayons sont de tout type approprié, droit ou coudé, et, ils sont disposés indifféremment selon un mode de rayonnage radial ou croisé. En outre, la roue est indifféremment une roue avant ou une roue arrière.

De façon connue, la jante est réalisée à partir d'un profilé en alliage léger, d'aluminium ou autre, qui est cintré selon un cercle et dont les deux extrémités sont de préférence assemblées par soudure, afin d'obtenir une bonne étanchéité à ce niveau.

La roue 1 représentée en figure 1 est par ailleurs équipée d'un pneumatique 5. Le pneumatique 5 est un pneu de dimensions usuelles. Les dimensions du pneumatique sont par exemple celles définies par la norme ISO 5775-1.

De façon connue, un tel pneu présente une bande de roulement centrale bordée par deux flancs latéraux. La base des flancs latéraux ou talon est plus épaisse, et renferme une tringle rigide ou souple dont la longueur est définie. La tringle est déformable, elle est réalisée en fil métallique ou en matériau non métallique. Sa longueur au repos est une dimension importante du pneu et définit le diamètre interne théorique du pneu au repos. Ce diamètre est adapté au diamètre nominal de la jante, c'est-à-dire le diamètre du pont supérieur de la jante mesuré le long de l'aile de retenue du pneu correspond par exemple au diamètre nominal défini par la norme ISO 5775-2. Selon les pneus, le diamètre théorique interne peut varier selon des tolérances relativement larges, notamment en fonction de l'épaisseur de la tringle et de la matière qui l'entoure si bien que pour une même jante, des pneus différents peuvent être montés de façon plus ou moins serrée.

L'invention a été mise en oeuvre avec des pneus actuellement commercialisés. Toutefois, il serait possible de concevoir des pneus spécialement prévus pour équiper la jante selon l'invention, en ajustant par exemple le diamètre théorique interne du pneu compte tenu de la forme du profil qui va être décrite, ou bien en modifiant la face interne et/ou externe des flancs.

La roue 1 représentée en figure 1 présente par ailleurs une valve de gonflage 6. Cette valve est de préférence d'un type particulier, adaptée au profil de la jante et au mode de montage tubeless, mais elle ne fait pas partie intégrante de la présente invention. Toute valve appropriée convient également.

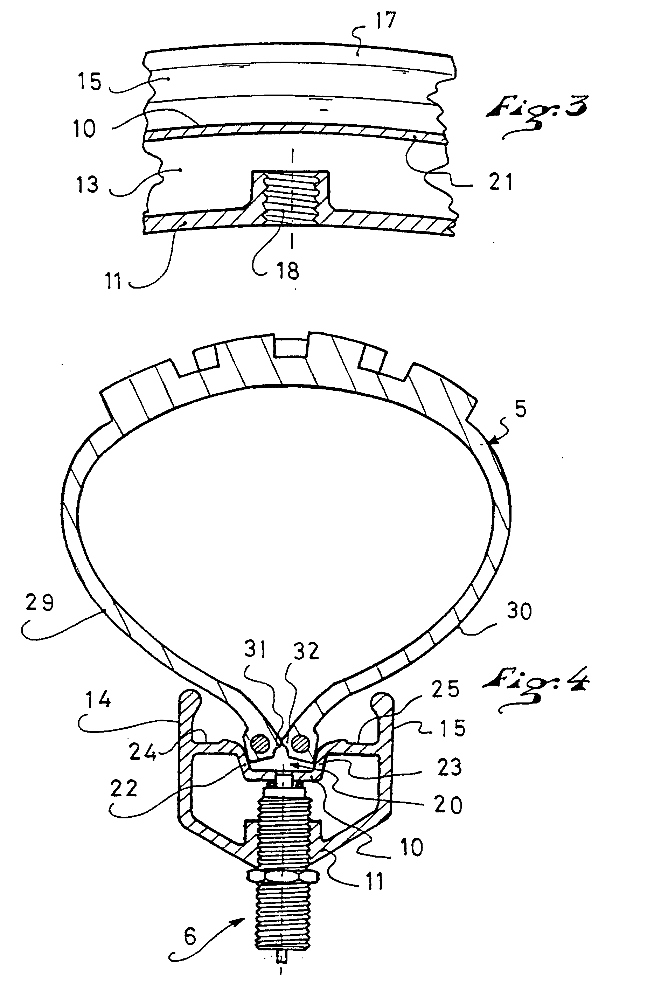

La figure 2 représente le profil de la jante 2 selon un mode préférentiel de mise en oeuvre de l'invention.

La jante présente de façon connue un pont supérieur 10, un pont inférieur 11 reliés entre eux par deux flancs 12 et 13, de façon à former un caisson. Les flancs se prolongent vers l'extérieur par des ailes 14 et 15, qui présentent à leur extrémité un bourrelet 16, 17 de façon à former ce que l'on appelle des crosses. Ces différents éléments sont connus.

La jante 2 présente des orifices d'accrochage pour le rayon qui sont situés seulement au niveau du pont inférieur 11. Le pont supérieur 10 n'est pas percé d'orifices pour le passage ou l'accrochage de rayons. La figure 2 représente ainsi un orifice 18 situé au pont inférieur 11. L'orifice est taraudé pour permettre le vissage d'un écrou ou d'un embout d'accrochage du rayon, qui sert aussi au réglage du rayon en tension. Ces éléments sont de tout type approprié et ne seront pas décrits en détail.

De façon préférentielle, le pont inférieur a été percé selon une technique de perçage par refoulement. Selon cette technique, au lieu d'être coupée, la matière est repoussée de façon à former une sorte de cheminée. La cheminée évite un affaiblissement du pont à ce niveau. Elle offre par ailleurs une surface interne qui peut facilement être taraudée.

Ce mode de perçage n'est pas limitatif, et tout mode d'accrochage des rayons convient, que ce soit au pont inférieur ou, par exemple à une nervure à la place du pont inférieur.

Selon l'invention, le pont supérieur 10 présente dans sa partie médiane une gorge annulaire 20. La gorge est encaissée par rapport à la surface du pont supérieur et étroite. Elle est délimitée par un fond de gorge 21 orienté parallèlement à l'axe de la jante et deux parois latérales 22 et 23. De chaque côté de la gorge, le pont supérieur présente deux rebords latéraux de support pour les talons du pneu, respectivement 24, 25. Les rebords 24 et 25 relient par ailleurs la gorge aux deux ailes 14 et 15 de la jante. Le diamètre nominal de la jante correspond au diamètre extérieur théorique des rebords 24 et 25 à leur jonction avec les ailes 14 et 15.

Les deux parois latérales 22 et 23 de la gorge sont sensiblement parallèles à un plan radial, ou, tel que cela est représenté, très légèrement convergentes en direction du fond de gorge. Dans le mode de réalisation illustré, l'angle d'inclinaison est de l'ordre de 10 degrés par rapport à un plan radial.

Les rebords 24 et 25 sont de préférence légèrement inclinés en dévers de façon que leur diamètre externe passe par un maximum et décroisse depuis les parois de la gorge vers les ailes 14 et 15. En section, tel que cela est représenté, les rebords présentent un bourrelet en saillie adjacent 24a, 25a à la gorge puis une portion 24b, 25b parallèle à l'axe prévue comme assise pour les talons du pneu. En variante, les rebords pourraient présenter en section une pente régulière depuis la gorge vers chacune des ailes.

Comme cela apparaîtra plus clairement dans la suite, l'important est que les talons du pneu aient à franchir une zone de diamètre maximum entre la gorge et leur assise le long de l'aile. A titre indicatif, on a obtenu de bons résultats avec une différence de 1 millimètre entre le diamètre du rebord au bord de la gorge et le diamètre contre l'aile. Une valeur de 0,35 millimètre convient également. Globalement, on peut considérer qu'une différence de diamètre comprise entre 2/10 et 2 millimètres convient. De préférence, la jonction entre les parois latérales de la gorge et les rebords est arrondie de façon à assurer une continuité relative.

Ainsi, contrairement aux jantes usuelles, les rebords ne convergent pas vers le centre de la roue. En fait, la distance relative entre le fond de la gorge et le sommet des ailes est du même ordre de grandeur que la distance relative entre le milieu du pont et le sommet des ailes pour une jante traditionnelle. Toutefois, comme la gorge est ici bordée de deux rebords en dévers, avec une zone de diamètre maximum, la gorge apparaît comme étroite et encaissée par rapport au profil d'une jante traditionnelle.

Les dimensions de la jante 2 sont déterminées de la façon suivante en rapport avec le diamètre théorique des tringles du pneu.

Le diamètre nominal de la jante à la jonction entre les rebords 24 et 25 et les ailes 14, 15 est sensiblement égal au diamètre interne théorique du pneu ou légèrement supérieur pour provoquer un léger serrage des tringles contre le pont.

De façon corrélative, le diamètre maximum des rebords, au sommet des bourrelets, est supérieur au diamètre interne théorique du pneu. En effet, ce diamètre est supérieur au diamètre nominal de la jante.

La hauteur des ailes 14 et 15 et la forme des crosses 16 et 17 sont déterminées de façon usuelle, pour obtenir un bon accrochage du pneu à l'état gonflé.

La largeur de la gorge 20 est sensiblement égale à l'épaisseur des deux talons du pneu joints l'un contre l'autre, c'est-à-dire qu'elle est prévue pour que les deux talons aient juste la place de se loger dans la gorge. Elle est aussi prévue pour provoquer un léger pincement des talons du pneu l'un vers l'autre pour que les talons du pneu une fois engagés dans la gorge aient tendance à s'écarter naturellement l'un de l'autre pour se plaquer contre les parois de la gorge. Par exemple, on peut prendre comme ordre de grandeur une largeur interne de gorge comprise entre la moitié et le tiers de la largeur du pont mesurée entre les ailes.

La profondeur de la gorge 20 est d'un ordre de grandeur égal ou inférieur à la hauteur des ailes 14 et 15 mesurée sous les crosses. Cette profondeur est au moins suffisante pour que le montage du pneu se réalise selon le mode opératoire qui va être décrit dans la suite.

A titre d'exemple non limitatif, on a réalisé une roue pour vélo tout terrain avec une jante, ayant un diamètre nominal de 560 millimètres, un diamètre au sommet des ailes de 571 millimètres, une largeur hors tout de 23 millimètres environ, et une largeur de 20 millimètres environ entre les ailes. Le diamètre au sommet des bourrelets des rebords était supérieur de 0,35 millimètre au diamètre nominal. La gorge avait une largeur de 7,25 millimètres et une profondeur de 3,35 millimètres. Les rebords avaient quant à eux une largeur de 7 millimètres. Ces chiffres, naturellement ne donnent que des ordres de grandeur indicatifs.

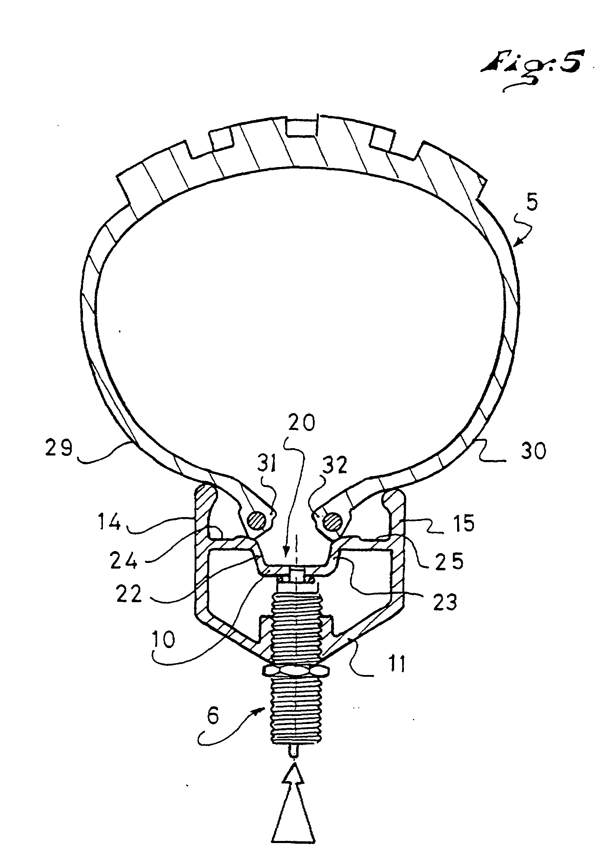

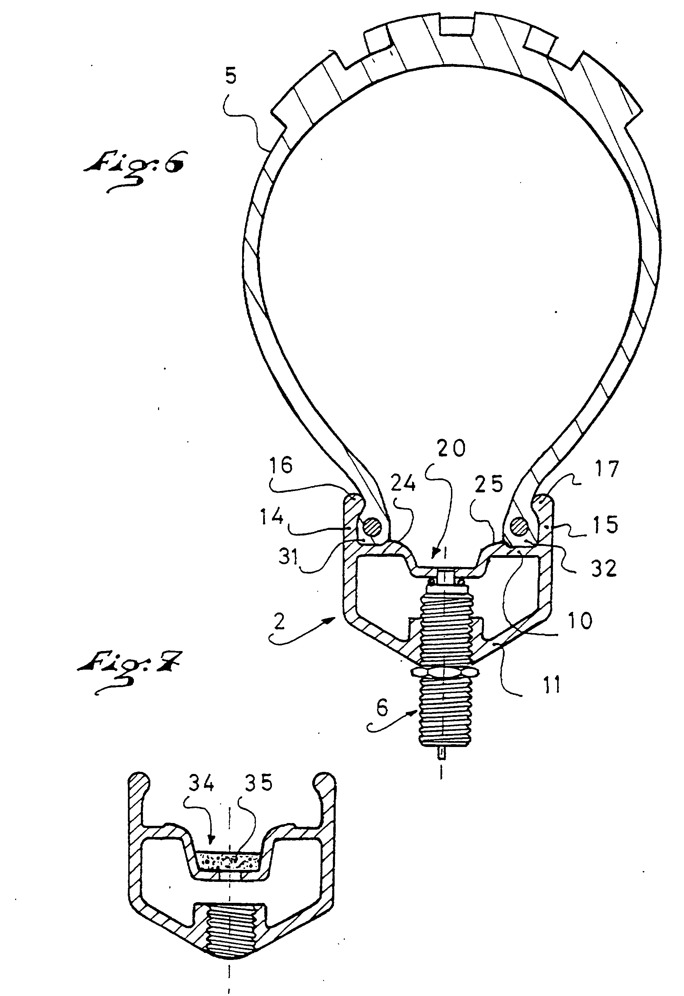

Pour le montage du pneu, la figure 4 montre une vue en coupe de la roue au niveau de la valve. Selon le mode de réalisation illustré, la valve 6 est vissée dans le pont inférieur 11, et elle présente à son extrémité un embout d'injection qui traverse le pont supérieur 10 au fond 21 de la gorge 20. La valve 6 débouche ainsi au fond de la gorge 20. Une étanchéité est réalisée à ce niveau, par tout moyen approprié, par exemple un joint torique.

Le pneu est présenté contre la jante et un premier flanc est engagé sur l'aile adjacente. Compte tenu des dimensions définies précédemment, le flanc du pneu peut être engagé entièrement entre les deux ailes 14 et 15 uniquement si une grande partie de sa longueur. approximativement la moitié au moins, a été préalablement introduite dans la gorge 20 dans une première phase de l'engagement du pneu. Sur une première partie de sa longueur, dans la gorge 20, le flanc du pneu épouse le fond de la gorge selon un diamètre inférieur à son diamètre interne, si bien qu'à l'opposé, le flanc du pneu peut franchir la crosse de l'aile qui a un diamètre supérieur.

Une fois l'aile franchie, le flanc du pneu est introduit dans la gorge 20 sur toute sa circonférence. Il se maintient dans la gorge du fait que le diamètre au sommet des parois 22 et 23 de la gorge est légèrement supérieur au diamètre interne du pneu.

Le second flanc du pneu est introduit de la même façon entre les deux ailes, et comme le premier flanc, il est introduit et maintenu engagé dans la gorge.

La figure 4 illustre cette phase du montage, avec les deux flancs 29 et 30 du pneu engagés dans la gorge 20. L'étroitesse de la gorge et l'élasticité naturelle de la structure du pneu fait que naturellement, les flancs sont repoussés contre les parois 22 et 23 de la gorge 20. si bien que, comme le montre la figure 4, ils viennent naturellement au contact des parois 22 et 23. Pour améliorer l'étanchéité entre les flancs du pneu et les parois 22 et 23 de la gorge, on pourrait prévoir sur les faces externes des flancs du pneu, vers les talons, une petite lèvre circulaire en saillie. On pourrait prévoir au niveau des talons des tétons ou autre élément en saillie qui, jouerait le rôle d'entretoise entre les deux talons au moment de cette phase de montage. Ces têtons renforcent l'appui des flancs du pneu contre les parois de la gorge et l'étanchéité à ce niveau.

Tel que cela est visible dans la figure 4, la valve 6 débouche au niveau de la jonction entre les deux talons et le cas échéant du jour qui existe entre eux.

Comme cela a été décrit précédemment, les flancs du pneu appuient contre les parois 22 et 23 de la gorge. La pression d'appui contre la gorge est faible mais suffisante pour que l'air insufflé au travers de la valve 6, même sous faible pression, demeure dans le volume délimité par la gorge et les talons du pneu, puis pénètre à l'intérieur du volume du pneu, détende son enveloppe externe, et augmente progressivement la pression à l'intérieur du pneu. Ceci augmente aussi la pression de contact des flancs du pneu contre les parois de la gorge et renforce progressivement l'étanchéité à ce niveau.

La figure 5 illustre cette première phase de gonflage primaire du pneu. Il faut souligner qu'à l'amorce de cette phase primaire, il existe une étanchéité relative entre les talons du pneu et la gorge, puis au cours de cette phase primaire, les deux talons 31, 32 à la base des flancs demeurent dans la gorge, et l'étanchéité du pneu se fait entre les flancs 29 et 30 du pneu et les parois 22 et 23 de la gorge.

Au fur et à mesure du gonflage, la pression à l'intérieur du pneu augmente, la structure du pneu soumet les tringles à des contraintes radiales relativement élevées, qui amènent les tringles à se détendre légèrement. Passé un certain cap de pression, l'extension des tringles devient suffisante pour que les flancs du pneu franchissent les bourrelets 24a et 25a des rebords, et se mettent en place contre les ailes 14 et 15 et leur crosse 16, 17, sous l'effet de la pression interne du pneu. En général, les deux flancs franchissent leur bourrelet respectif non pas simultanément, mais l'un après l'autre. Une fois le pneu mis en place, il suffit d'ajuster la pression interne à la pression désirée. En général, il est nécessaire de l'abaisser. La figure 6 illustre le pneu dans cette phase finale de montage.

Le pneu est alors maintenu en place contre les ailes. L'étanchéité se fait entre les talons du pneu et le pont supérieur de la jante. Compte tenu de sa matière relativement malléable, le pneu présente des qualités naturelles d'étanchéité à ce niveau. Le cas échéant, la surface du pneu dans cette zone peut être aménagée pour renforcer encore l'étanchéité. Egalement, dans ce but, on utilise de préférence un pneu avec un diamètre interne théorique légèrement inférieur au diamètre nominal de la jante pour avoir un serrage des talons du pneu sur le pont de la jante.

En cas de choc latéral, on a observé que le flanc du pneu pouvait se décoller localement de la crosse de l'aile, mais que pour des chocs courants, le talon du pneu restait collé contre l'aile. L'inclinaison des rebords contribue à la retenue des talons 31, 32 du pneu contre les ailes. Dans ces conditions, le pneu reprend sa forme sans perte de pression dès que le choc est passé.

D'après ce qui précède, on comprend que la gorge centrale étroite et encaissée est utile pour l'engagement des deux flancs du pneu. Ses parois sont par ailleurs utiles pour assurer une étanchéité du pneu durant une phase de gonflage primaire. L'inclinaison ou le dévers des rebords est utile pour permettre la retenue des flancs dans la gorge tout au long de la phase primaire de gonflage. Elle est aussi utile, une fois le pneu gonflé, pour retenir les talons du pneu en cas de choc latéral.

Le dégonflage du pneu se fait selon un mode opératoire inverse de ce qui a été décrit. Dans un premier temps, le pneu est dégonflé, ou bien en ouvrant la valve ou en la démontant. Ensuite, l'un après l'autre, les flancs du pneu sont amenés dans la gorge pour pouvoir franchir progressivement les ailes, le cas échéant avec l'aide d'un outil approprié, par exemple un démonte-pneu.

La figure 7 illustre une variante de réalisation de la jante selon l'invention. Selon cette variante, une bande de matériau mou tel que de la mousse 35 est ajouté au fond de la gorge 34 de façon à combler le fond de gorge. La gorge 34 est plus profonde que la gorge précédente, d'une hauteur correspondant globalement à l'épaisseur de la bande 35. L'épaisseur de mousse est suffisante pour que le diamètre de la jante mesuré à la surface supérieure de la mousse soit supérieur au diamètre interne du pneu. Cette bande de mousse est utilisée dans la première phase de montage du pneu. Son but est d'assurer une étanchéité relative entre les talons du pneu et le fond de gorge au moins au début de la phase de gonflage primaire, et non plus entre les flancs et les parois latérales de la gorge. Il s'agit par exemple d'une mousse légère à cellules fermées, avec de préférence une surface externe lisse. Au montage du pneu, lors de leur engagement dans la gorge, les talons se plantent dans la bande de mousse qui se déforme légèrement d'une part pour permettre l'engagement total du pneu, et d'autre part pour s'adapter au diamètre interne des talons, une fois les flancs du pneu engagés dans la gorge.

La valve débouche dans le volume interne du pneu. La technique de gonflage est la même que ce qui a été décrit précédemment. Au début de l'amorçage primaire, l'air est emprisonné entre l'enveloppe du pneu et la surface supérieure de la mousse.

Passé l'amorçage du gonflage primaire, les talons du pneu s'écartent, et prennent appui contre les parois de la gorge, comme cela a été décrit précédemment. Ensuite, les tringles se détendent et les talons s'installent sur les rebords, après franchissement des bourrelets, ou, le cas échéant de la zone de diamètre maximum.

Avantageusement, avec cette variante, la gorge peut être plus large, en effet, il n'est plus nécessaire de pincer élastiquement les deux flancs entre les bords de la gorge pour que le gonflage primaire s'amorce puisque, l'étanchéité de départ se fait entre la base du talon et la surface supérieure de la mousse. En outre, compte tenu de l'élasticité de la mousse en épaisseur, on peut avoir des tolérances de fabrication du pneu plus larges.

D'autres matériaux que la mousse pourraient convenir pour tapisser le fond de la jante, pourvu qu'ils forment une bande qui augmente le périmètre du fond de jante et que sa surface supérieure soit déformable.

Naturellement, la présente description n'est donnée qu'à titre indicatif, et l'on pourrait adopter des variantes sans pour autant sortir du cadre de l'invention. Les variantes pourraient concerner notamment l'accrochage des rayons, la forme intérieure des ailes et des crochets de la jante. Par exemple, les ailes pourraient avoir des lèvres ou autre profil en saillie pour améliorer l'accrochage du pneu. D'autres variantes sont encore possibles.

De plus, l'invention s'applique aussi aux jantes dites à crochet. Ces jantes se différencient des jantes à crosse par la forme du pont supérieur et la forme des bourrelets qui retiennent le pneu. Pour appliquer l'invention à ces jantes, il suffirait de remplacer le pont supérieur par un pont de forme générale moins creusée, et comprenant une gorge centrale et deux rebords latéraux avec, le long de la gorge, un bourrelet ou autre de diamètre supérieur au diamètre interne théorique du pneu, de façon à retenir le pneu dans la gorge tout au long de la phase de gonflage primaire.

## Revendications

1. Jante pour une roue de bicyclette, prévue pour un montage tubeless du pneu, comprenant à sa périphérie un canal annulaire prévu pour recevoir le pneu, le canal étant délimité par un pont supérieur (10) et deux ailes latérales (14, 15), le pont supérieur (10) présentant une gorge centrale (20) délimitée par un fond de gorge (21) et deux parois latérales (22, 23), et, de chaque côté de la gorge, entre la gorge et chacune des ailes, un rebord (24, 25) en dévers depuis le bord de la gorge vers les ailes avec un bourrelet (24a, 25a) adjacent à la gorge, **caractérisée par le fait que** la gorge centrale est étroite et encaissée, que les bourrelets (24a, 25a) des rebords (24, 25) présentent une zone de diamètre maximum supérieur au diamètre des rebords (24, 25) le long des ailes (14, 15) d'une valeur comprise entre 2/10 et 2 millimètres, que les parois latérales (22, 23) de la gorge sont inclinées de 10 degrés environ par rapport à un plan radial, et que les deux ailes latérale (14, 15) aient un bourrelet (16, 17) de retenue du pneu.

2. Jante selon la revendication 1, **caractérisée par le fait que** la gorge a une largeur de 7,25 millimètres et une profondeur de 3,35 millimètres.

3. Jante selon la revendication 1, **caractérisée par le fait que** la différence de diamètre entre la zone de diamètre maximum du bourrelet (24a, 25a) et le diamètre des rebords (24, 25) contre les ailes est de 0,35 millimètres.

4. Jante selon la revendication 1, **caractérisée par le fait que** les rebords (24, 25) présentent au-delà des bourrelets (24a, 25a) une portion (24b, 25b) parallèle à l'axe de la jante.

5. Roue de cycle équipée d'un pneu tubeless et comprenant une jante reliée à un moyeu central par une pluralité de rayons, où la jante présente à sa périphérie un canal annulaire prévu pour recevoir un pneu, le canal étant délimité par un pont supérieur et deux ailes latérales (14,15) (10), le pont supérieur ayant une gorge centrale (20, 34) délimitée par un fond de gorge (21) et deux parois latérales (22, 23), et, de chaque côté de la gorge, entre la gorge et chacune des ailes, un rebord (24, 25) en dévers avec un bourrelet (24a, 25a) adjacent à la gorge, le pneu ayant deux flancs latéraux avec des talons à leur base,
**caractérisée par le fait que** la gorge centrale (20) est étroite et encaissée, que la largeur de la gorge est sensiblement égale à l'épaisseur des deux talons du pneu joints pour qu'au montage du pneu les deux talons aient juste la place de se loger dans la gorge (20) et qu'ils soient pincés entre les parois (22, 23) de la gorge, que le pont supérieur est dépourvu d'orifices à part celui prévu pour la valve, et que, les ailes présentent un bourrelet (16, 17) d'accrochage du pneu.

6. Roue de cycle équipée d'un pneu tubeless selon la revendication 5, le pneu ayant un diamètre interne théorique défini, **caractérisée par le fait que** le diamètre maximum des bourrelets (24a, 25a) le long de la gorge (20, 34) est supérieur au diamètre interne théorique du pneu.

7. Roue de cycle équipée d'un pneu tubeless selon la revendication 5, **caractérisée par le fait que** les talons du pneu sont pourvus sur l'intérieur de tétons formant des entretoises entre les talons du pneu.

## Patentansprüche

1. Felge für ein Fahrradrad, vorgesehen für eine schlauchlose Montage des Reifens, die an ihrer Peripherie einen ringförmigen Kanal aufweist, der zum Aufnehmen des Reifens vorgesehen ist, wobei der Kanal durch eine obere Brücke (10) und zwei seitliche Flügel (14, 15) begrenzt ist, wobei die obere Brücke (10) eine zentrale Kehle (20) aufweist, die begrenzt ist durch einen Kehlenboden (21) und zwei seitliche Wände (22, 23) und von jeder Seite der Kehle zwischen der Kehle und jedem der Flügel ein Kragen (24, 25) schräg ausgehend von dem Rand der Kehle in Richtung zu den Flügeln mit einer Verdickung (24a, 25a), benachbart zu der Kehle, vorgesehen ist, **dadurch gekennzeichnet, dass** die zentrale Kehle eng und eingetieft ist, dass die Verdickungen (24a, 25a) der Kragen (24, 25) eine Zone maximalen Durchmessers größer zu dem Durchmesser der Kragen (24, 25) entlang der Flügel (14, 15) von einem Wert enthalten zwischen 2/10 und 2 mm aufweist, dass die seitlichen Wände (22, 23) der Kehle um etwa 10° geneigt sind in Bezug auf eine radiale Ebene, und dass die seitlichen Flügel (14, 15) eine Verdickung (16, 17) zum Halten des Reifens aufweisen.

2. Felge nach Anspruch 1, **dadurch gekennzeichnet, dass** die Kehle eine Breite von 7,25 mm und eine Tiefe von 3,35 mm aufweist.

3. Felge nach Anspruch 1, **dadurch gekennzeichnet, dass** der Unterschied im Durchmesser zwischen der Zone eines maximalen Durchmessers der Verdickung (24a, 25a) und dem Durchmesser der Kragen (24, 25) gegen die Flügel etwa 0,35 mm ist.

4. Felge nach Anspruch 1, **dadurch gekennzeichnet, dass** die Kragen (24, 25) oberhalb der Verdickungen (24a, 25a) einen Abschnitt (24b, 25b) parallel zu der Achse der Felge aufweisen.

5. Fahrradrad, ausgestattet mit einem schlauchlosen Reifen und aufweisend eine Felge, die an einer zentralen Nabe verbunden ist durch eine Mehrzahl von Speichen, wobei die Felge an ihrer Peripherie einen ringförmigen Kanal aufweist, der zum Aufnehmen eines Reifens vorgesehen ist, wobei der Kanal durch eine obere Brücke (10) und zwei seitliche Flügel (14, 15) begrenzt ist, wobei die obere Brücke eine zentrale Kehle (20, 34) aufweist, welche durch einen Kehlenboden (21) und zwei seitliche Wände (22, 23) begrenzt ist, und von jeder Seite der Kehle, zwischen der Kehle und jedem der Flügel ein Kragen (24, 25) schräg mit einer Verdickung (24a, 25a) benachbart zu der Kehle vorgesehen ist, wobei der Reifen zwei seitliche Flanken aufweist mit Verdickungen an ihrer Basis, **dadurch gekennzeichnet, dass** die zentrale Kehle (20) eng und eingetieft ist, dass die Breite der Kehle im Wesentlichen gleich zu der Dicke der zwei Verdickungen der Reifen-Verbindungsstellen ist damit bei einer Montage des Reifens die beiden Verdickungen gerade den Platz haben, in der Kehle (20) aufgenommen zu werden, und dass sie zwischen den Wänden (22, 23) der Kehle geklemmt werden, dass die obere Brücke mit keinen Öffnungen versehen ist außer derjenigen, die vorgesehen ist für das Ventil, und dass die Flügel eine Verdickung (16, 17) zum Einhaken des Reifens aufweisen.

6. Fahrradrad, ausgestattet mit einem schlauchlosen Reifen gemäß Anspruch 5, wobei der Reifen einen theoretischen, definierten, inneren Durchmesser aufweist, **dadurch gekennzeichnet, dass** der maximale Durchmesser der Verdickungen (24a, 25a) entlang der Kehle (20, 34) größer ist als der innere theoretische Durchmesser des Reifens.

7. Fahrradrad, ausgestattet mit einem schlauchlosen Reifen nach Anspruch 5, **dadurch gekennzeichnet, dass** die Verdickungen des Reifens auf der Innenseite der Ansätze sind, welche Stege zwischen den Verdickungen des Reifens bilden.

## Claims

1. Rim for a bicycle wheel, provided for a tubeless assembly of the tire, having at its periphery an annular channel provided to receive the tire, the channel being demarcated by an upper bridge (10) and two lateral wings (14, 15), the upper bridge (10) having a central groove (20) demarcated by a groove base (21) and two lateral walls (22, 23), and on each side of the groove, between the groove and each of the wings, a shoulder (24, 25) that is oblique from the edge of the groove towards the wings with a flange (24a, 25a) adjacent the groove, **characterized in that** the central groove is narrow and recessed, that the flanges (24a, 25a) of the shoulders (24, 25) have a zone of maximum diameter greater than the diameter of the shoulders (24, 25) along the wings (14, 15) having a value comprised between 2/10 and 2 millimeters, that the lateral walls (22, 23) of the groove are inclined by approximately 10 degrees with respect to a radial plane, and that the two lateral wings (14, 15) have a flange (16, 17) for retaining the tire.

2. Rim according to claim 1, **characterized in that** the groove has a width of 7.25 millimeters and a depth of 3.35 millimeters.

3. Rim according to claim 1, **characterized in that** the difference of diameter between the zone of maximum diameter of the flange (24a, 25a) and the diameter of the shoulders (24, 25) against the wings is 0.35 millimeters.

4. Rim according to claim 1, **characterized in that** the shoulders (24, 25) have, beyond the flanges (24a, 25a), a portion (24b, 25b) that is parallel to the axle of the rim.

5. Cycle wheel equipped with a tubeless tire and having a rim connected to a central hub by a plurality of spokes, where the rim has an annular channel along its periphery provided to receive a tire, the channel being demarcated by an upper bridge (10) and two lateral wings (14, 15), the upper bridge having a central groove (20, 34) demarcated by a groove base (21) and two lateral walls (22, 23), and, on each side of the groove, between the groove and each of the wings, a shoulder (24, 25) that is oblique with a flange (24a, 25a) adjacent the groove, the tire having two lateral flanks with heels at their base,
**characterized in that** the central groove (20) is narrow and recessed, that the width of the groove is substantially equal to the thickness of the two joined heels of the tire so that upon assembly of the tire the two heels have the space necessary to be housed in the groove (20) and that they are pinched between the walls (22, 23) of the groove, that the upper bridge is devoid of openings with the exception of the one provided for the valve, and that the wings have a flange (16, 17) for hooking the tire.

6. Cycle wheel equipped with a tubeless tire according to claim 5, the tire having defined theoretical inner diameter, **characterized in that** the maximum diameter of the flanges (24a, 25a) along the groove (20, 34) is greater than the theoretical inner diameter of the tire.

7. Cycle wheel equipped with a tubeless tire according to claim 5, **characterized in that** the heels of the tire are provided, on the inside, with nipples forming spacers between the heels of the tire.
